# EUROPÄISCHE PATENTSCHRIFT

(11) **EP 2 236 853 B1**
(45) Veröffentlichungstag und Bekanntmachung des Hinweises auf die Patenterteilung: **30.04.2014**
(21) Anmeldenummer: 10157453.1
(22) Anmeldetag: 24.03.2010
(51) Int. Cl.: F16F 9/46

(54) **Verstellbare Dämpfventileinrichtung**
Adjustable steam valve device
Dispositif de robinet de vapeur réglable

(30) Priorität: 04.04.2009 DE 102009016464; 04.04.2009 DE 102009061003
(43) Veröffentlichungstag der Anmeldung: 06.10.2010
(73) Patentinhaber: ZF Friedrichshafen AG, 88038 Friedrichshafen (DE)
(72) Erfinder: Förster, Andreas, 97422, Schweinfurt (DE)

(56) Entgegenhaltungen:
- EP-A1- 0 561 404
- DE-A1-102006 043 849
- DE-C1- 19 624 895
- US-B1- 6 182 805

## Beschreibung

Die Erfindung betrifft eine verstellbare Dämpfventileinrichtung gemäß dem Oberbegriff von Patentanspruch 1.

Ein mittels Magnetkraft verstellbares Dämpfventil nimmt im stromlosen Zustand je nach Konstruktionsprinzip eine besonders weiche oder eine besonders harte Dämpfkraftkennlinie ein. Dieser Effekt wird durch mindestens eine Federkraft erzeugt, gegen die die Magnetkraft wirken muss. Fällt die Magnetkraft aus, z. B. durch einen Kabeibruch, dann verschiebt die Federkraft einen Ventilkörper in eine Endposition. Wenn man davon ausgeht, dass eine hohe Dämpfkraft auch hohe Sicherheitsreserven für das Fahrwerk eines Fahrzeugs darstellt, dann ist das grundlegende Wirkprinzip vorteilhaft, da die Sicherheitseinrichtung für das verstellbare Dämpfventil praktisch ohne weiteren Aufwand vorhanden ist.

Es ist jedoch schon aus der EP 0 561 404 B1 oder der DE 39 17 064 A1 bekannt, das als Notbetriebskennlinie nicht unbedingt die härteste Dämpfkrafteinstellung angestrebt wird, sondern eine eher mittlere Dämpfkraftkennlinie angestrebt wird. Die Fig. 2 der EP 0 561 404 B1 beschreibt eine verstellbare Dämpfventileinrichtung, die eine Vorstufenventileinrichtung und ein Hauptstufenventil umfasst. Über den Abfluss von Dämpfmedium aus einem Steuerraum des Hauptstufenventils wird die Dämpfkraft der Dämpfventileinrichtung eingestellt.

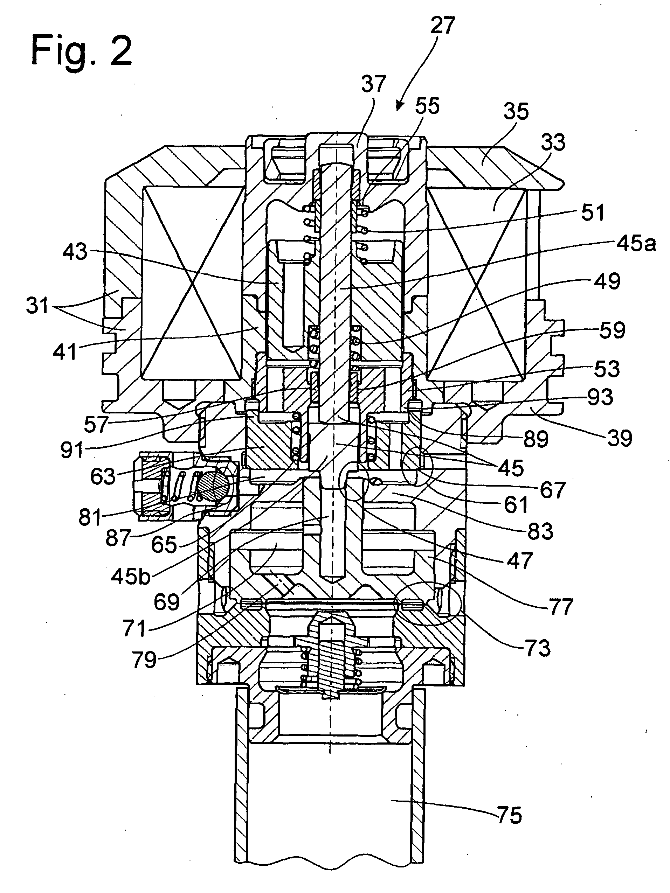

Die Vorstufenventileinrichtung umfasst ein Vorstufensteuerventil und ein Notbetriebventils, wobei die beiden Ventile hinsichtlich des Strömungswegs des Dämpfmediums aus dem Steuerraum in Reihe angeordnet sind (Fig. 2). Schon bei einem kleinen Stellstrom öffnet das Notbetriebventil (529a) und gibt den Abfluss (26i) vollständig frei. In der Notbetriebsstellung wirkt nur der Querschnitt 26i und bestimmt damit eine z. B. mittlere Dämpfkrafteinstellung.

In der Variante nach Fig. 6 der EP 0561 404 B1 umfasst die Vorstufenventileinrichtung ebenfalls ein Notbetriebventil auf, das jedoch dem Vorstufenventil hydraulisch parallel geschaltet ist. Daraus ergibt sich das Problem, dass eine Fehlfunktion des Notbetriebventils auch die Dämpfkrafteinstellung des Vorstufenventils beeinflusst.

Sowohl nach dem Bauprinzip der Fig. 2 wie auch der Fig. 6 besteht die Schwierigkeit, dass der axiale bewegliche Ventilkörper des Vorstufenventils und der Ventilkörper des Notbetriebs in unmittelbarem Kontakt stehen und das Notbetriebventil ausgehend von der Notbetriebstellung in die Normalbetriebstellung eine Verschiebebewegung auf dem Ventilkörper des Vorstufenventils ausführt.

Zwangsläufig müssen sich die beiden Ventilkörper der Vorstufenventileinrichtung sehr leichtgängig zueinander bewegen können. Daraus ergeben sich kleine Ringspalte, die einerseits innere Leckagen hervorrufen, die die Dämpfkrafteinstellung beeinflussen und andererseits die Führung der Ventilkörper zur Magnetspule verschlechtern.

Diese Schwierigkeiten lassen sich zwar beherrschen, doch geht der dafür erforderliche Fertigungsaufwand zu Lasten der Herstellungskosten.

Die Aufgabe der vorliegenden Erfindung besteht darin, eine Dämpfventileinrichtung zu realisieren, bei der ein verstellbares Ventil und ein Notbetriebventil über einen einzige Magnetspule angesteuert werden kann, jedoch die aus dem Stand der Technik bekannten Probleme der inneren Leckage und der erforderlichen Maßhaltigkeit der Bauteile minimiert werden.

Erfindungsgemäß wird die Aufgabe dadurch gelöst, dass im magnetischen Fluss zwischen dem ersten Ventil und dem Notbetriebventil ein Magnetflusslenkungselement angeordnet ist, das den Magnetfluss für das Notbetriebventil und für das erste Ventil bestimmt.

Über das Magnetflusslenkungselement können das erste Ventil und das Notbetriebventil räumlich getrennt werden. Durch die räumliche Trennung lösen sich auch die Probleme hinsichtlich der inneren Leckage der Dämpfventileinrichtung.

Bei einer ersten Ausführungsform sind das erste Ventil und das Notbetriebventil räumlich axial in Reihe angeordnet und dazwischen ist das Magnetflusslenkungselement angeordnet.

Das Magnetflusslenkungselement soll dabei einen möglichst kleine Magnetflusswiderstand aufweisen, wie z. B. Weicheisen.

Gemäß einem vorteilhaften Unteranspruch führt der Magnetfluss durch den Ventilkörper des Notbetriebventils über das Magnetflusslenkungselement in den Ventilkörper des ersten Ventils. Das erste Ventil und das Notbetriebventil liegen bezogen auf den Magnetfluss in Reihe, so dass der gesamte Magnetfluss durch das erste Ventil fließen kann und folglich hohe Stellkräfte möglich sind.

In weiterer vorteilhafter Ausgestaltung weist das Magnetflusslenkungselement eine Durchgangsöffnung für einen Ventilkörper des ersten Ventils auf.

Das Magnetflusslenkungselement übernimmt noch eine weitere Funktion, indem es den Ventilkörper des ersten Ventils lagert.

Um Fertigungstoleranzen der beteiligten Bauteile innerhalb der Dämpfungseinrichtung ausgleichen zu können, ist der Ventilkörper in Bewegungsrichtung mehrteilig ausgeführt, wobei mindestens zwei Längenabschnitte des Ventilkörpers eine Winkelbewegung zueinander ausführen können.

Das Magnetflusslenkungselement selbst ist in einem Gehäuse der Dämpfventileinrichtung fixiert. Bei montiertem ersten Ventil ergibt sich zusammen mit dem Gehäuse und der Magnetspule eine Baueinheit, deren Funktion sich unabhängig von anderen Komponenten überprüfen lässt.

Eine weitere Maßnahme zur einfachen Justierung des ersten Ventils besteht darin, dass der Ventilkörper des ersten Ventils durch einen entgegengesetzt gerichtet wirksamen Federsatz schwimmend gelagert ist.

Dabei ist sichergestellt, dass mindestens ein Federteller für eine Feder des Federsatzes bei montiertem ersten Ventil für eine Justierung zugänglich ist.

Es ist vorgesehen, dass der Federteller für die Feder über die Durchgangsöffnung im Magnetflusslenkungselement zugänglich ist. Durch eine Verschiebung des Federtellers ist eine Änderung der resultierenden Federkraft des Federsatzes möglich.

Im Hinblick auf eine möglichst gleichmäßige Kraftübertragung auf den Ventilkörper des Notbetriebventils ist dieser ringförmig ausgeführt und konzentrisch zum Ventilkörper des ersten Ventils angeordnet.

Für eine kompakte Bauweise der Dämpfventileinrichtung stützt sich eine Vorspannfeder des Notbetriebventils am Magnetflusslenkungselement ab.

Das Notbetriebventil ist als ein Sitzventil ausgeführt und deshalb besonders unempfindlich hinsichtlich Leckagen.

Eine Ventilsitzfläche des Notbetriebventils ist an einem Gehäuse der Dämpfventileinrichtung ausgeführt.

Bei einer Alternativlösung sind das Notbetriebventil und das erste Ventil koaxial mit radialem Abstand zueinander angeordnet, wobei zwischen den beiden Ventilen das Magnetflusslenkungselement angeordnet ist.

Dabei weist das Magnetflusslenkungselement einen hohen Magnetflusswiderstand auf. Der hohe Magnetflusswiderstand kann entweder durch die Materialauswahl aber auch durch vergleichsweise kleine Stirnflächen des Magnetflusslenkungselements erreicht werden. Kleine Übergangsflächen stellen prinzipbedingt einen großen Magnetflusswiderstand dar. Das Notbetriebventil und das erste Ventil sind bezogen auf den Magnetfluss in einer Parallelschaltung angeordnet. Bei dieser Variante besteht ein definiertes Verhältnis zwischen dem Magnetfluss für das Notbetriebventil und dem ersten Ventil.

Das Magnetflusslenkungselement wird von einer Hülse gebildet und kann z. B. von einer Edelstahl- oder einem Kunststoffrohr abgelängt werden.
Im Hinblick auf eine gute Führung der beteiligten Ventilkörper zentriert sich der Ventilkörper des ersten Ventils am Magnetflusslenkungselement.

Das Magnetflusslenkungselement lässt sich problemlos im Gehäuse fixieren, indem es in Längsrichtung zum Ventilkörper des ersten Ventils in dem Gehäuse der Dämpfventileinrichtung verspannt ist.

Anhand der folgenden Figurenbeschreibung soll die Erfindung näher erläutert werden.

### Es zeigt:

- Fig. 1: Schwingungsdämpfer mit einer Dämpfventileinrichtung
- Fig. 2: Dämpfventileinrichtung mit einer Reihenanordnung von erstem Ventil und Notbetriebventil
- Fig. 3: Dämpfventileinrichtung mit einer koaxialen Anordnung des ersten Ventils zum Notbetriebventil

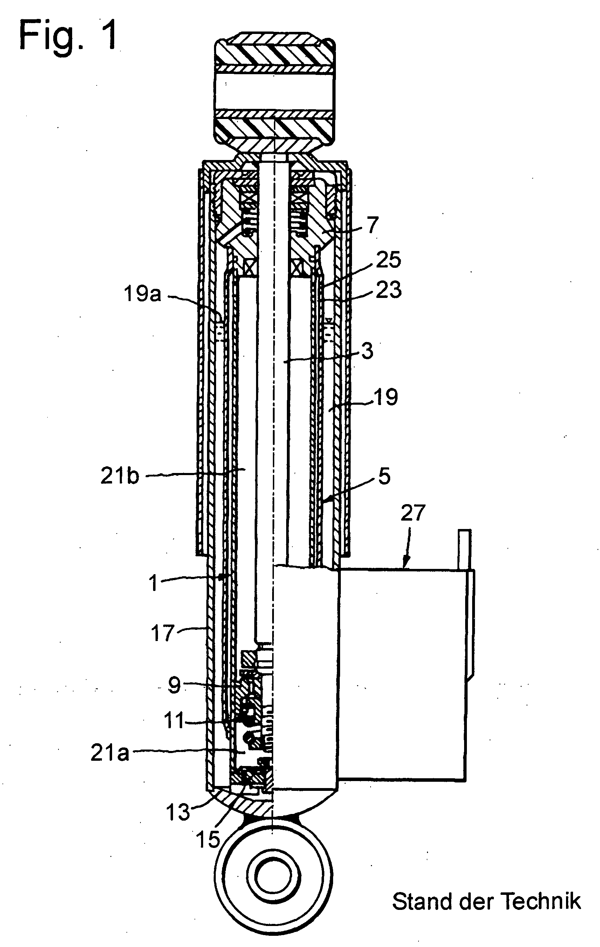

In Fig. 1 weist ein Schwingungsdämpfer einen Zylinder 1 auf, in dem eine Kolbenstange 3 axial beweglich angeordnet ist. Eine Führungs- und Dichtungseinheit 7 führt die Kolbenstange 3 aus dem oberen Ende des Zylinders heraus. Innerhalb des Zylinders 1 ist an der Kolbenstange 3 eine Kolbeneinheit 9 mit einer Kolbenventilanordnung 11 befestigt. Das untere Ende des Zylinders 1 ist durch eine Bodenplatte 13 mit einer Bodenventilanordnung 15 abgeschlossen. Der Zylinder 1 wird von einem Behälterrohr 17 umhüllt. Das Behälterrohr 17 und ein Zwischenrohr 5 bilden einen Ringraum 19, der eine Ausgleichskammer darstellt. Der Raum innerhalb des Zylinders 1 ist durch die Koibeneinheit 9 in eine erste Arbeitskammer 21 a und eine zweite Arbeitskammer 21 b unterteilt. Die Arbeitskammern 21 a und 21 b sind mit Dämpfflüssigkeit gefüllt. Die Ausgleichskammer 19 ist bis zu dem Niveau 19a mit Flüssigkeit und darüber mit Gas gefüllt. Innerhalb der Ausgleichskammer 19 ist eine erste Leitungsstrecke, nämlich eine Hochdruckteilstrecke 23, gebildet, welche über eine Bohrung 25 des Zylinders 1 mit der zweiten Arbeitskammer 21 b in Verbindung steht. An diese Hochdruckteilstrecke schließt sich ein seitlich an dem Behälterrohr 17 angebautes verstellbare Dämpfventileinrichtung 27 an. Von dieser führt, nicht dargestellt, eine zweite Leitungsstrecke, nämlich eine Niederdruckteilstrecke 29, in die Ausgleichskammer 19.

Fährt die Kolbenstange 3 aus dem Zylinder 1 nach oben aus, verkleinert sich die obere Arbeitskammer 21 b. Es baut sich in der oberen Arbeitskammer 21 b ein Überdruck auf, der sich nur durch die Kolbenventilanordnung 11 in die untere Arbeitskammer 21 a abbauen kann, solange das verstellbare Dämpfventil 27 geschlossen ist. Wenn das verstellbare Dämpfventil 27 geöffnet ist, so fließt gleichzeitig Flüssigkeit von der oberen Arbeitskammer 21 b durch die Hochdruckteilstrecke 23 und das verstellbare Dämpfventil 27 in die Ausgleichskammer19. Die Dämpfcharakteristik des Schwingungsdämpfers beim Ausfahren der Kolbenstange 3 ist also davon abhängig, ob das verstellbare Dämpfventil 27 mehr oder weniger offen oder geschlossen ist.

Wenn die Kolbenstange 3 in den Zylinder 1 einfährt, so bildet sich in der unteren Arbeitskammer 21 a ein Überdruck. Flüssigkeit kann von der unteren Arbeitskammer 21 a durch die Kolbenventilanordnung 11 nach oben in die obere Arbeitskammer 21 b übergehen. Die durch das zunehmende Kolbenstangenvolumen innerhalb des Zylinders 1 verdrängte Flüssigkeit wird durch die Bodenventilanordnung 15 in die Ausgleichskammer 19 ausgetrieben. In der oberen Arbeitskammer 21 b tritt, da der Durchflusswiderstand der Kolbenventilanordnung 11 geringer ist als der Durchflusswiderstand der Bodenventilanordnung 15, ebenfalls ein steigender Druck auf. Dieser steigende Druck kann bei geöffnetem Dämpfventil 27 durch die Hochdruckteilstrecke 23 wiederum in den Ausgleichsraum 19 überfließen. Dies bedeutet, dass bei geöffnetem Dämpfventil 27 der Stoßdämpfer auch beim Einfahren dann eine weichere Charakteristik hat, wenn das verstellbare Dämpfventil 27 geöffnet ist und eine härtere Charakteristik, wenn das Dämpfventil 27 geschlossen ist, genauso wie beim Ausfahren der Kolbenstange. Festzuhalten ist, dass die Strömungsrichtung durch die Hochdruckteilstrecke 23 des Bypasses immer die gleiche ist, unabhängig davon, ob die Kolbenstange ein- oder ausfährt.

Die Figur 2 zeigt die Dämpfventileinrichtung 27 in einem Gehäuse 31, das extern an dem Behälterrohr 17 oder innerhalb des Zylinders 1, z. B. an der Kolbenstange 3 befestigt ist. In dem Gehäuse 31 ist eine ringförmige Magnetspule 33 angeordnet. Eine Öffnung eines Gehäusedeckels 35 wird von einer Rückschlusshülse 37 mit einem Boden verschlossen. Zwischen einem Gehäuseunterteil 39 und der Rückschlusshülse 37 ist ein Isolator 41 gegen den Magnetfluss der Magnetspule 33 angeordnet.

Innerhalb der Rückschlusshülse 37 ist ein Ventilanker 43 zusammen mit einem Ventilkörper 45 eines ersten Ventils 47 axial schwimmend gegen die Kraft eines beiderseits des Ventilankers 43 und damit auch des Ventilkörpers 45 wirksamen Federsatzes. Der Federsatz umfasst pro Seite mindestes eine Feder 49, die der Feder 51 auf der anderen Seite des Ventilankers 43 entgegengesetzt gerichtet wirkt. An dem Gehäuseunterteil 39 ist ein Magnetflusslenkungselement 53 fixiert, das nur einen kleinen Magnetflusswiderstand aufweist, also magnetisch gut leitfähig ist.

Der Ventilkörper 45 des ersten Ventils 47 ist einerseits im Boden der Rückschlusshülse 37 und andererseits in dem Magnetflusslenkungselement 53 gelagert. Ein erster Federteller 55 für die mindestens eine Feder 51 wird von der Rückschlusshülse 37 gebildet. Ein zweiter Federteller 57 greift in eine Durchgangsöffnung 59 des Magnetflusslenkungselements 53 ein, durch die sich auch der Ventilkörper 45 des ersten Ventilelements 47 erstreckt. Der zweite Federteller 57 ist über die Durchgangsöffnung 59 zugänglich und bildet eine Presspassung. Dadurch wird es möglich, dass der zweite Federteller 59 bei schon montiertem Magnetflusslenkungselement 53 in Grenzen axial verschiebbar ist, um den Federsatz 49; 51 nachzuspannen. Etwaige Fertigungstoleranzen können durch das Nachspannen ausgeglichen werden.

Axial in Reihe zum ersten Ventil 47 ist in dem Gehäuse 31 ein Notbetriebventil 61 angeordnet, wobei zwischen den beiden Ventilen 47; 61 das Magnetflusslenkungselement 53 angeordnet ist. Ein Ventilkörper 63 des Notbetriebventils 61 ist ringförmig ausgeführt und konzentrisch zum Ventilkörper 45 des ersten Ventils 47 angeordnet. Eine Vorspannfeder 65, die sich am Magnetflusslenkungselement 53 abstützt, spannt den Ventilkörper 63 des Notbetriebventils 61, das als Sitzventil ausgeführt ist, auf eine Ventilsitzfläche 67 des Gehäuses 31.

Der Ventilkörper 45 des ersten Ventils 47 ist in seiner der Bewegungsrichtung mehrteilig ausgeführt, wobei mindestens zwei Längenabschnitte 45a; 45b des Ventilkörpers 45 eine Winkelbewegung zueinander ausführen können. Der Längenabschnitt 45b ist innerhalb der Durchgangsöffnung 59 des Magnetflusslenkungselements 53 winkelbeweglich gelagert und wird stirnseitig von dem mit dem Ventilanker 43 verbundenen Längenabschnitt 45a bewegt.

Der zweite Längenabschnitt 45b des ersten Ventils 47 wirkt auf eine Abflussöffnung 69 eines Steuerraums 71, eines vom ersten Ventil 47 gesteuerten Hauptstufenventils 73. Das Hauptventil 73 ist über einen Anschlussstutzen 75 mit einem Arbeitsraum 21a; 21 b des Schwingungsdämpfers verbunden. Das Dämpfmedium übt auf einen Hauptstufenventilkörper 77 eine Abhubkraft aus, der eine Schließkraft des ersten Ventils 47 entgegenwirkt. Zusätzlich übt ein Druck des Dämpfmediums im Steuerraum 71, der über eine Verbindungsöffnung 79 im Hauptstufenventil 73 mit dem Anschlussstutzen 75 verbunden ist, eine Schließkraft auf den Hauptstufenventilkörper 77 aus. Je nach Zuhaltekraft des ersten Ventils 47 auf die Abflussöffnung 69 des Hauptstufenventils 73 hebt der Hauptstufenventilkörper 77 von seiner Ventilsitzfläche ab, so dass das Dämpfmedium über den Ventilsitz radial in einen Ausgleichsraum 19 oder einen Arbeitsraum des Schwingungsdämpfers abfließen kann.

Die Zuhaltekraft des ersten Ventils 47 wird von der Bestromung durch die Magnetspule 33 bestimmt. Eine große Bestromung führt zu einer großen Zuhaltekraft und im stromlosen Zustand liegt die minimale Zuhaltekraft an. Das Dämpfmedium kann insbesondere bei geringster Bestromung in einen Zwischenraum 81 des Gehäuses 31 fließen, der sich zwischen einer Unterseite des Magnetflusslenkungselements 53 und einer Oberseite einer Zwischenwand 83 des Gehäuses 85 zum Hauptstufenventil 73 erstreckt. Der Abfluss aus diesem Zwischenraum wird von dem Notbetriebventil 61 und ggf. von einem Überdruckventil 87 bestimmt. Im stromlosen Zustand wird das Notbetriebventil 61 von der Vorspannfeder 65 in einer Schließposition auf der Ventilsitzfläche 67 gehalten. Bezogen auf den Strömungsweg des Dämpfmediums ausgehend vom Anschlussstutzen 75 liegen das erste Ventil 47 und das Notbetriebventil 61 in Reihe.

Bei einer geringen Bestromung stellt sich ein Magnetfluss ein, der sich vom Gehäuseunterteil 39 radial in den Ventilkörper 63 des Notbetriebventils 61 fortsetzt. Zwischen einer Kante 89 des Ventilkörpers 63 und dem Magnetflusslenkungselements 53 liegt ein kleinerer Widerstand vor als zwischen der Ventilsitzfläche 67 und dem Ventilkörper 63, so dass der Magnetfluss eine Abhubkraft auf den Ventilkörper 63 in Richtung des Magnetflusslenkungselements 53 ausübt. Der Magnetfluss setzt sich über den im Ventilanker 43 befindlichen Längenabschnitt des Ventilkörpers 45a des ersten Ventils auf den Ventilanker und auf die Rückschlusshülse 37 fort. Der geringe Strom reicht noch nicht aus, den ersten Ventilkörper 45 des ersten Ventils 47 bedeutsam in Richtung der Abflussöffnung 69 zu bewegen. Erst mit größerer Bestromung wird der von dem Federsatz 49, 51 eingestellte Luftspalt zwischen dem Ventilanker 43 und der Oberseite des Magnetflusslenkungselements 53 überwunden. Bei geöffnetem Notbetriebsventil 61 sinkt nochmals der magnetische Widerstand beim Übergang von dem Gehäuseunterteil 39 über den Ventilkörper 63 des Notbetriebventils 61 auf das Magnetflusslenkungselements 53, da die radiale Überdeckung zwischen einem umlaufenden Steg 91 des Ventilkörpers 63 des Notbetriebventils 61 und einem Absatz 93 am Magnetflusslenkungselements 53 mit der Abhubbewegung des Notbetriebventil 61 zunimmt.

Bei stromloser Magnetspule 33 und geschlossenem Notbetriebventil 61 steht ein Überdruckventil 87 zur Verfügung, das den Dämpfmediumabfluss aus dem Zwischenraum 81 in einen Arbeitsraum 21 a; b oder Ausgleichsraum 19 ermöglicht und damit eine Überlastung des gesamten Schwingungsdämpfers verhindert.

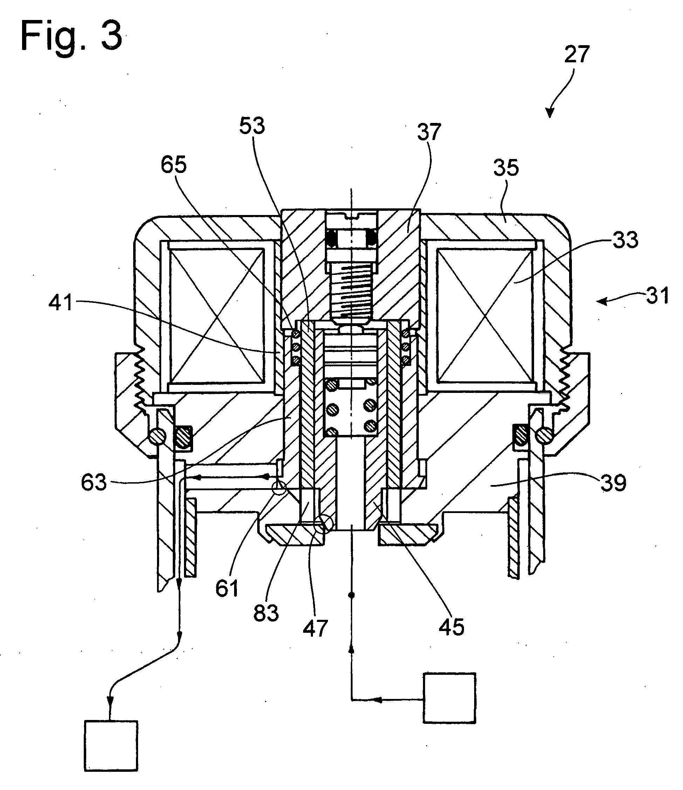

Die Variante nach Fig. 3 zeigt eine Dämpfventileinrichtung 27 beschränkt auf das erste Ventil und das Notbetriebventil 61. Der weitere konstruktive Aufbau des Hauptstufenventils 73 ist beliebig. Die Erfindung nach den Fig. 2 und 3 funktioniert auch ohne ein Hauptstufenventil. Dann stellt das erste Ventil das Dämpfventil dar. Das Notbetriebventil 61 und das erste Ventil sind bezogen auf den Strömungsweg des Dämpfmediums ebenfalls in Reihe angeordnet.

Ein Unterschied zur Fig. 2 besteht darin, dass das Notbetriebventil 61 und das erste Ventil 47 koaxial in einem Abstand zueinander angeordnet sind, d. h. dass der Ventilkörper 63 des Notbetriebventils 61 den Ventilkörper 45 des ersten Ventils 47 zumindest teilweise einhüllt. In dem Ringraum zwischen den beiden Ventilkörpern 45; 63 ist das Magnetflusslenkungselement 53 angeordnet, das ebenfalls von einer Hülse gebildet wird. Das Magnetflusslenkungselement 53 ist zwischen dem Rückschlusskörper 37 und dem Gehäuseunterteil 39 in Längsrichtung zum Ventilkörper 45 des ersten Ventils 47 verspannt. Das Magnetflusslenkungselement 53 weist einen hohen Magnetflusswiderstand auf und besteht beispielsweise aus Kunststoff oder Edelstahl. Alternativ kann man auch einen an sich gut leitenden Werkstoff verwenden, der jedoch durch kleine Stirnflächen einen großen Magnetflusswiderstand aufweist. In der dargestellten Variante wird diese kleine Stirnfläche durch kleine Segmente erreicht, die durch Quernuten voneinander getrennt sind.

Wie man leicht erkennt, zentriert sich der Ventilkörper 45 des ersten Ventils 47 an der Innenwandung des Magnetflusslenkungselements 53. Der Ventilkörper 63 des Notbetriebventils 61 wiederum kann sich mit seinem Außendurchmesser am Gehäuse bzw. Gehäuseunterteil 39 und dem Isolator 41 zentrieren, so dass ein Restspalt zwischen dem Ventilkörper 63 des Notbetriebventil 61 und dem Magnetflusslenkungselement 53 vorliegen kann und aufgrund der Reihenschaltung der beiden Ventilkörper jedoch nicht schädlich ist für die Funktion der Dämpfventileinrichtung.

Bei einer Bestromung der Magnetspule 33 stellen sich zwei parallele Magnetflüsse ein, die die beiden Ventilkörper 45; 63 durchfließen und im Gehäuse 33; 35 wieder zusammenlaufen. Über die Gestaltung der Ventilkörperquerschnitte in Richtung des Rückschlusskörpers 37 können die magnetischen Widerstände dimensioniert werden, die wiederum die Aufteilung der Magnetflüsse bestimmen.

Selbstverständlich kann auch bei dieser Variante dem Abfluss aus dem Zwischenraum 81 zwischen dem ersten Ventil 47 und dem Notbetriebventil 61 ein Überdruckventil vorgesehen sein, das im Strömungsweg dem Notbetriebventil 61 parallel geschaltet ist.

### Bezugszeichenliste

- 1: Zylinder
- 3: Kolbenstange
- 5: Zwischenrohr
- 7: Führungs- Dichtungseinheit
- 9: Kolbeneinheit
- 11: Kolbenventilanordnung
- 13: Bodenplatte
- 15: Bodenventilanordnung
- 17: Behälterrohr
- 19: Ringraum
- 21 a; 21 b: Arbeitskammern
- 23: Hockdruckteilstrecke
- 25: Bohrung
- 27: Dämpfventileinrichtung
- 29: Niederdruckteilstrecke
- 31: Gehäuse
- 33: Magnetspule
- 35: Gehäusedeckel
- 37: Rückschlusshülse
- 39: Gehäuseunterteil
- 41: Isolator
- 43: Ventilanker
- 45: Ventilkörper
- 47: erstes Ventil
- 49, 51: Feder
- 53: Magnetflusslenkungselement
- 55: erster Federteller
- 57: zweiter Federteller
- 59: Durchgangsöffnung
- 61: Notbetriebventil
- 63: Ventilkörper

- 65: Vorspannfeder
- 67: Ventilsitzfläche
- 45a, b: Längenabschnitte des ersten Ventils
- 69: Abflussöffnung
- 71: Steuerraum
- 73: Hauptstufenventil
- 75: Anschlussstutzen
- 77: Hauptstufenventilkörper
- 79: Verbindungsöffnung
- 81: Zwischenraum
- 83: Zwischenwand
- 85: Gehäuse
- 87: Überdruckventil
- 89: Kante
- 91: Steg
- 93: Absatz

## Patentansprüche

1. Verstellbare Dämpfventileinrichtung (27), insbesondere für einen Schwingungsdämpfer umfassend ein erstes Ventil (47) und Notbetriebventil (61), die beide über eine gemeinsame Magnetspule (33) betätigt werden, wobei das Notbetriebventil (61) beim Übergang von der Notbetriebstellung in einen Normalbetrieb eine Relativbewegung zum ersten Ventil (47) ausführt,
**dadurch gekennzeichnet,**
**dass** im magnetischen Fluss zwischen dem ersten Ventil (47) und dem Notbetriebventil (61) ein Magnetflusslenkungselement (53) angeordnet ist, das den Magnetfluss für das Notbetriebventil (61) und für das erste Ventil (47) bestimmt.

2. Verstellbare Dämpfventileinrichtung nach Anspruch 1,
**dadurch gekennzeichnet,**
**dass** das erste Ventil (47) und das Notbetriebventil (61) räumlich axial in Reihe angeordnet sind und dazwischen das Magnetflusslenkungselement (53) angeordnet ist.

3. Verstellbare Dämpfventileinrichtung nach Anspruch 1,
**dadurch gekennzeichnet,**
**dass** das Magnetflusslenkungselement (53) einen kleinen Magnetflusswiderstand aufweist.

4. Verstellbare Dämpfventileinrichtung nach Anspruch 2,
**dadurch gekennzeichnet,**
**dass** der Magnetfluss durch den Ventilkörper (63) des Notbetriebventils (61) über das Magnetflusslenkungselement (53) in den Ventilkörper (45) des ersten Ventils (47) führt.

5. Verstellbare Dämpfventileinrichtung nach Anspruch 2,
**dadurch gekennzeichnet,**
**dass** das Magnetflusslenkungselement (53) eine Durchgangsöffnung (59) für den Ventilkörper (45) des ersten Ventils (47) aufweist.

6. Verstellbare Dämpfventileinrichtung nach Anspruch 2,
**dadurch gekennzeichnet,**
**dass** ein Ventilkörper (45) des ersten Ventils (47) von dem Magnetflusslenkungselement (53) gelagert wird.

7. Verstellbare Dämpfventileinrichtung nach Anspruch 1,
**dadurch gekennzeichnet,**
**dass** der Ventilkörper (45) des ersten Ventils (47) in Bewegungsrichtung mehrteilig ausgeführt ist, wobei mindestens zwei Längenabschnitte (45a; 45b) des Ventilkörpers (45) eine Winkelbewegung zueinander ausführen können.

8. Verstellbare Dämpfventileinrichtung nach Anspruch 1,
**dadurch gekennzeichnet,**
**dass** das Magnetflusslenkungselement (53) selbst in einem Gehäuse (31) der Dämpfventileinrichtung (27) fixiert ist.

9. Verstellbare Dämpfventileinrichtung nach Anspruch 1,
**dadurch gekennzeichnet,**
**dass** der Ventilkörper (45) des ersten Ventils (47) durch einen entgegengesetzt gerichtet wirksamen Federsatz (49; 51) schwimmend gelagert ist.

10. Verstellbare Dämpfventileinrichtung nach Anspruch 9,
**dadurch gekennzeichnet,**
**dass** mindestens ein Federteller (57) für eine Feder (49) des Federsatzes (49; 51) bei montiertem ersten Ventil (47) für eine Justierung zugänglich ist.

11. Verstellbare Dämpfventileinrichtung nach den Ansprüchen 5 und 10,
**dadurch gekennzeichnet,**
**dass** der Federteller (57) für die Feder (49) über die Durchgangsöffnung (59) im Magnetflusslenkungselement (53) zugänglich ist.

12. Verstellbare Dämpfventileinrichtung nach Anspruch 1,
**dadurch gekennzeichnet,**
**dass** ein ringförmiger Ventilkörper (63) des Notbetriebventils (61) konzentrisch zum Ventilkörper (45) des ersten Ventils (47) angeordnet ist.

13. Verstellbare Dämpfventileinrichtung nach Anspruch 2,
**dadurch gekennzeichnet,**
**dass** sich eine Vorspannfeder (65) des Notbetriebventils (61) am Magnetflusslenkungselement (53) abstützt.

14. Verstellbare Dämpfventileinrichtung nach Anspruch 1,
**dadurch gekennzeichnet,**
**dass** das Notbetriebventil (61) als ein Sitzventil ausgeführt ist.

15. Verstellbare Dämpfventileinrichtung nach Anspruch 14,
**dadurch gekennzeichnet,**
**dass** eine Ventilsitzfläche (67) des Notbetriebventils (61) an einem Gehäuse (33) der Dämpfventileinrichtung ausgeführt ist.

16. Verstellbare Dämpfventileinrichtung nach Anspruch 1,
**dadurch gekennzeichnet,**
**dass** das Notbetriebventil (61) und das erste Ventil (47) koaxial mit radialem Abstand zueinander angeordnet sind, wobei zwischen den beiden Ventilen (47; 61) das Magnetflusslenkungselement (53) angeordnet ist.

17. Verstellbare Dämpfventileinrichtung nach Anspruch 16,
**dadurch gekennzeichnet,**
**dass** das Magnetflusslenkungselement (53) einen hohen Magnetflusswiderstand aufweist.

18. Verstellbare Dämpfventileinrichtung nach Anspruch 16,
**dadurch gekennzeichnet,**
**dass** das Magnetflusslenkungselement (53) von einer Hülse gebildet wird.

19. Verstellbare Dämpfventileinrichtung nach Anspruch 18,
**dadurch gekennzeichnet,**
**dass** sich der Ventilkörper (45) des ersten Ventils (47) am Magnetflusslenkungselement (53) zentriert.

20. Verstellbare Dämpfventileinrichtung nach Anspruch 18,
**dadurch gekennzeichnet,**
**dass** das Magnetflusslenkungselement (53) in Längsrichtung zum Ventilkörper (45) des ersten Ventils (47) in dem Gehäuse (33) der Dämpfventileinrichtung (27) verspannt ist.

## Claims

1. Adjustable damping valve device (27), in particular for a vibration damper, comprising a first valve (47) and an emergency operation valve (61) which are both actuated by means of a common magnet coil (33), wherein the emergency operation valve (61) performs a relative movement with respect to the first valve (47) during the transition from the emergency operation position into a normal operation state,
**characterized**
**in that**, in the magnetic flux between the first valve (47) and the emergency operation valve (61), there is arranged a magnetic flux guiding element (53) which determines the magnetic flux for the emergency operation valve (61) and for the first valve (47).

2. Adjustable damping valve device according to Claim 1,
**characterized**
**in that** the first valve (47) and the emergency operation valve (61) are, in spatial terms, arranged axially in series, and the magnetic flux guiding element (53) is arranged between them.

3. Adjustable damping valve device according to Claim 1,
**characterized**
**in that** the magnetic flux guiding element (53) exhibits a low magnetic flux resistance.

4. Adjustable damping valve device according to Claim 2,
**characterized**
**in that** the magnetic flux passes through the valve body (63) of the emergency operation valve (61) into the valve body (45) of the first valve (47) via the magnetic flux guiding element (53).

5. Adjustable damping valve device according to Claim 2,
**characterized**
**in that** the magnetic flux guiding element (53) has a passage opening (59) for the valve body (45) of the first valve (47).

6. Adjustable damping valve device according to Claim 2,
**characterized**
**in that** a valve body (45) of the first valve (47) is borne by the magnetic flux guiding element (53).

7. Adjustable damping valve device according to Claim 1,
**characterized**
**in that** the valve body (45) of the first valve (47) is of multi-part design in the movement direction, wherein at least two longitudinal portions (45a; 45b) of the valve body (45) can perform an angular movement with respect to one another.

8. Adjustable damping valve device according to Claim 1,
**characterized**
**in that** the magnetic flux guiding element (53) itself is fixed in a housing (31) of the damping valve device (27).

9. Adjustable damping valve device according to Claim 1,
**characterized**
**in that** the valve body (45) of the first valve (47) is mounted in a floating manner by means of a set of springs (49; 51) that act in opposite directions.

10. Adjustable damping valve device according to Claim 9,
**characterized**
**in that** at least one spring disc (57) for one spring (49) of the set of springs (49; 51) is accessible for adjustment when the first valve (47) is in a mounted state.

11. Adjustable damping valve device according to Claims 5 and 10,
**characterized**
**in that** the spring disc (57) for the spring (49) is accessible via the passage opening (59) in the magnetic flux guiding element (53).

12. Adjustable damping valve device according to Claim 1,
**characterized**
**in that** an annular valve body (63) of the emergency operation valve (61) is arranged concentrically with respect to the valve body (45) of the first valve (47).

13. Adjustable damping valve device according to Claim 2,
**characterized**
**in that** a preload spring (65) of the emergency operation valve (61) is supported on the magnetic flux guiding element (53).

14. Adjustable damping valve device according to Claim 1,
**characterized**
**in that** the emergency operation valve (61) is in the form of a seat valve.

15. Adjustable damping valve device according to Claim 14,
**characterized**
**in that** a valve seat surface (67) of the emergency operation valve (61) is formed on a housing (33) of the damping valve device.

16. Adjustable damping valve device according to Claim 1,
**characterized**
**in that** the emergency operation valve (61) and the first valve (47) are arranged coaxially with a radial spacing to one another, wherein the magnetic flux guiding element (53) is arranged between the two valves (47; 61).

17. Adjustable damping valve device according to Claim 16,
**characterized**
**in that** the magnetic flux guiding element (53) exhibits a high magnetic flux resistance.

18. Adjustable damping valve device according to Claim 16,
**characterized**
**in that** the magnetic flux guiding element (53) is formed by a sleeve.

19. Adjustable damping valve device according to Claim 18,
**characterized**
**in that** the valve body (45) of the first valve (47) is centred on the magnetic flux guiding element (53).

20. Adjustable damping valve device according to Claim 18,
**characterized**
**in that** the magnetic flux guiding element (53) is braced in the housing (33) of the damping valve device (27) in the longitudinal direction with respect to the valve body (45) of the first valve (47).

## Revendications

1. Dispositif de soupape d'amortissement réglable (27), en particulier pour un amortisseur de vibrations comportant une première soupape (47) et une soupape de fonctionnement d'urgence (61) qui sont toutes deux actionnées par le biais d'une bobine magnétique commune (33), la soupape de fonctionnement d'urgence (61) effectuant un déplacement relatif par rapport à la première soupape (47) lors du passage de la position de fonctionnement d'urgence à un fonctionnement normal,
**caractérisé en ce**
**qu'**un élément de guidage de flux magnétique (53) est disposé dans le flux magnétique entre la première soupape (47) et la soupape de fonctionnement d'urgence (61), lequel élément de guidage de flux magnétique détermine le flux magnétique pour la soupape de fonctionnement d'urgence (61) et pour la première soupape (47).

2. Dispositif de soupape d'amortissement réglable selon la revendication 1,
**caractérisé en ce**
**que** la première soupape (47) et la soupape de fonctionnement d'urgence (61) sont disposées en rangée axialement dans l'espace et l'élément de guidage de flux magnétique (53) est disposé entre celles-ci.

3. Dispositif de soupape d'amortissement réglable selon la revendication 1,
**caractérisé en ce**
**que** l'élément de guidage de flux magnétique (53) présente une faible résistance au flux magnétique.

4. Dispositif de soupape d'amortissement réglable selon la revendication 2,
**caractérisé en ce**
**que** le flux magnétique traverse le corps de soupape (63) de la soupape de fonctionnement d'urgence (61) et passe dans le corps de soupape (45) de la première soupape (47) par le biais de l'élément de guidage de flux magnétique (53).

5. Dispositif de soupape d'amortissement réglable selon la revendication 2,
**caractérisé en ce**
**que** l'élément de guidage de flux magnétique (53) comprend une ouverture traversante (59) pour le corps de soupape (45) de la première soupape (47).

6. Dispositif de soupape d'amortissement réglable selon la revendication 2,
**caractérisé en ce**
**qu'**un corps de soupape (45) de la première soupape (47) est supporté par l'élément de guidage de flux magnétique (53).

7. Dispositif de soupape d'amortissement réglable selon la revendication 1,
**caractérisé en ce**
**que** le corps de soupape (45) de la première soupape (47) est réalisé en plusieurs parties dans la direction de déplacement, au moins deux tronçons longitudinaux (45a ; 45b) du corps de soupape (45) pouvant effectuer un déplacement angulaire l'un par rapport à l'autre.

8. Dispositif de soupape d'amortissement réglable selon la revendication 1,
**caractérisé en ce**
**que** l'élément de guidage de flux magnétique (53) lui-même est fixé dans un boîtier (31) du dispositif de soupape d'amortissement (27).

9. Dispositif de soupape d'amortissement réglable selon la revendication 1,
**caractérisé en ce**
**que** le corps de soupape (45) de la première soupape (47) est monté flottant au moyen d'un jeu de ressorts (49 ; 51) agissant en sens contraires.

10. Dispositif de soupape d'amortissement réglable selon la revendication 9,
**caractérisé en ce**
**qu'**au moins une coupelle de ressort (57) pour un ressort (49) du jeu de ressorts (49 ; 51) est accessible pour un ajustage lorsque le première soupape (47) est montée.

11. Dispositif de soupape d'amortissement réglable selon les revendications 5 et 10,
**caractérisé en ce**
**que** la coupelle de ressort (57) pour le ressort (49) est accessible par le biais de l'ouverture traversante (59) dans l'élément de guidage de flux magnétique (53).

12. Dispositif de soupape d'amortissement réglable selon la revendication 1,
**caractérisé en ce**
**qu'**un corps de soupape annulaire (63) de la soupape de fonctionnement d'urgence (61) est disposé de manière concentrique au corps de soupape (45) de la première soupape (47).

13. Dispositif de soupape d'amortissement réglable selon la revendication 2,
**caractérisé en ce**
**qu'**un ressort de précontrainte (65) de la soupape de fonctionnement d'urgence (61) s'appuie contre l'élément de guidage de flux magnétique (53).

14. Dispositif de soupape d'amortissement réglable selon la revendication 1,
**caractérisé en ce**
**que** la soupape de fonctionnement d'urgence (61) est réalisée sous forme de soupape à siège.

15. Dispositif de soupape d'amortissement réglable selon la revendication 14,
**caractérisé en ce**
**qu'**une surface de siège de soupape (67) de la soupape de fonctionnement d'urgence (61) est réalisée sur un boîtier (33) du dispositif de soupape d'amortissement.

16. Dispositif de soupape d'amortissement réglable selon la revendication 1,
**caractérisé en ce**
**que** la soupape de fonctionnement d'urgence (61) et la première soupape (47) sont disposées de manière coaxiale l'une à l'autre et à distance radiale l'une de l'autre, l'élément de guidage de flux magnétique (53) étant disposé entre les deux soupapes (47 ; 61).

17. Dispositif de soupape d'amortissement réglable selon la revendication 16,
**caractérisé en ce**
**que** l'élément de guidage de flux magnétique (53) présente une résistance élevée au flux magnétique.

18. Dispositif de soupape d'amortissement réglable selon la revendication 16,
**caractérisé en ce**
**que** l'élément de guidage de flux magnétique (53) est formé par une douille.

19. Dispositif de soupape d'amortissement réglable selon la revendication 18,
**caractérisé en ce**
**que** le corps de soupape (45) de la première soupape (47) est centré sur l'élément de guidage de flux magnétique (53).

20. Dispositif de soupape d'amortissement réglable selon la revendication 18,
**caractérisé en ce**
**que** l'élément de guidage de flux magnétique (53) est serré dans le boîtier (33) du dispositif de soupape d'amortissement (27) dans la direction longitudinale par rapport au corps de soupape (45) de la première soupape (47).
